# EUROPÄISCHE PATENTSCHRIFT

(11) **EP 2 076 686 B1**
(45) Veröffentlichungstag und Bekanntmachung des Hinweises auf die Patenterteilung: **01.09.2010**
(21) Anmeldenummer: 07803362.8
(22) Anmeldetag: 10.09.2007
(51) Int. Cl.: F16D 65/14, F16D 65/21

(54) **SELBSTVERSTÄRKENDE SCHEIBENBREMSE**
SELF-ENERGISING DISK BRAKE
FREIN À DISQUE À AUTO-SERRAGE

(30) Priorität: 06.10.2006 DE 102006047408
(43) Veröffentlichungstag der Anmeldung: 08.07.2009
(73) Patentinhaber: Robert Bosch GmbH, 70442 Stuttgart (DE)
(72) Erfinder: BAUMANN, Dietmar, 71282 Hemmingen (DE)
(86) Internationale Anmeldenummer: PCT/EP2007/059444
(87) Internationale Veröffentlichungsnummer: WO 2008/043627

(56) Entgegenhaltungen:
- EP-A- 1 550 817
- WO-A-2005/057041
- WO-A-2007/082744
- DE-A1- 10 307 224

## Beschreibung

### Stand der Technik

Die Erfindung betrifft eine selbstverstärkende Scheibenbremse mit den Merkmalen des Oberbegriffs des Anspruchs 1.

Eine derartige, eine Selbstverstärkung aufweisende Scheibenbremse ist bekannt aus der WO 98/14715. Die bekannte Scheibenbremse weist einen Reibbremsbelag auf, der auf einer Seite einer Bremsscheibe angeordnet ist und der zur Betätigung der Scheibenbremse mit einer Betätigungseinrichtung gegen die Bremsscheibe drückbar ist. Zur Erzielung der Selbstverstärkung weist der Reibbremsbelag einen Keil auf seiner der Bremsscheibe abgewandten Rückseite auf und der Reibbremsbelag ist zusammen mit dem Keil in einer Umfangsrichtung der Bremsscheibe verschiebbar. Die Betätigungseinrichtung wirkt senkrecht zum Keil und damit in einem Keilwinkel zu einer Senkrechten zur Bremsscheibe.

Wird zur Betätigung der Scheibenbremse der Reibbremsbelag von der Betätigungseinrichtung gegen die drehende Bremsscheibe gedrückt, übt die drehende Bremsscheibe eine Reibungskraft in der Dreh- und Umfangsrichtung auf den Reibbremsbelag mit dem Keil aus, der mit dem Reibbremsbelag in der Drehrichtung der Bremsscheibe verschoben wird. Die Verschiebung des Keils bewirkt eine Zustellung des Reibbremsbelags senkrecht zur Bremsscheibe, d. h. ein Teil des zur Betätigung der Scheibenbremse notwendigen Zustellwegs erfolgt aufgrund der Verschiebung des Keils. Die Scheibenbremse ist wegverstärkend oder wegübersetzend, der Zustellweg des Reibbremsbelags senkrecht zur Bremsscheibe ist größer als der Betätigungsweg der Betätigungseinrichtung.

Aus der Druckschritt DE 10301224 A1 ist eine gattungsgemäß ausgebildete selbstverstärkende Scheibenbremse bekannt, bei der ein eingeschaltetes Betätigungselement eine Verschiebekraft erzeugt und einen Schieber gegen die Kraft einer Federeinrichtung in seiner Ausgangslage festhält. Nach einem Abschalten des Betäigungselements wird der Schieber von der Federeinrichtung verschoben. Am Schieber ausgebildete Schrägflächen lenken die Federkraft um und drücken einen Reibbremsbelag gegen eine rotierende Bremsscheibe. Der Reibbremsbelag weist auf seiner von der Bremsscheibe abgewandten Rückseite Keilflächen auf und ist in Umfangsrichtung zur Bremsscheibe innerhalb des Bremssattels verschiebbar. Auf den Keilflächen abwälzende Wälzkörper stützen den beweglichen Reibbremsbelag an einen, nur radial verschiebbar geführten Druckstück ab. Ein dadurch ausgebildetes Servogetriebe bewirkt eine Verstärkung der Anpresskraft, in dem es die Federkraft einer quer zur Bremsscheibe wirksamen Federeinrichtung überträgt.

### Offenbarung der Erfindung

Die erfindungsgemäße Scheibenbremse mit den Merkmalen des Anspruchs 1 weist eine Wegverstärkung auf. Zusätzlich zur Wegverstärkung weist die erfindungsgemäße Scheibenbremse eine Kraftübersetzung auf. Unter einer Verstärkung ist dabei eine Nutzung von Hilfsenergie zur Betätigung der Scheibenbremse zu verstehen. Mit der Erfindung wird kinetische Energie eines mit der Scheibenbremse ausgerüsteten Fahrzeugs bzw. der drehenden und mit der Scheibenbremse gebremsten Bremsscheibe als Hilfsenergie zur Bremsbetätigung genutzt. Die von der Betätigungseinrichtung der Scheibenbremse aufzubringende Betätigungsenergie und Betätigungsleistung ist durch die Nutzung von Hilfsenergie verringert. Im Unterschied dazu ist unter Kraftübersetzung eine Erhöhung einer Kraft ohne Hilfsenergie zu verstehen. Geändert, und zwar gegensinnig, werden Kraft und Weg, die Betätigungsenergie und Betätigungsleistung bleiben unverändert. Es wird die Spannkraft, also die Andruckkraft des Reibbremsbelags gegen die Bremsscheibe, erhöht, die von der Betätigungseinrichtung auf das keilförmige Abstützelement ausgeübte Betätigungskraft ist kleiner als die Spannkraft. Dafür vergrößert sich der Betätigungsweg, also der Verschiebeweg des keilförmigen Abstützelements im Verhältnis zum Zustellweg des Reibbremsbelags zur Bremsscheibe.

Die Wegverstärkung der erfindungsgemäßen Scheibenbremse wird dadurch erzielt, dass bei betätigter Scheibenbremse die drehende Bremsscheibe den gegen sie gedrückten Reibbremsbelag mit seinem Keil in der Umfangs- und Drehrichtung beaufschlagt. Dadurch verschiebt die drehende Bremsscheibe den Reibbremsbelag mit dem Keil entgegen dem keilförmigen Abstützelement. Die Verschiebung des Keils des Reibbremsbelags am keilförmigen Abstützelement bewirkt eine Zustellbewegung des Keils mit dem Reibbremsbelag zur Bremsscheibe. Das bedeutet, ein Teil des Zustellwegs des Reibbremsbelags zur Bremsscheibe wird durch die Verschiebung des Reibbremsbelags mit dem Keil in der Drehrichtung der Bremsscheibe erzeugt. Der von der Betätigungseinrichtung zu bewirkende Zustellweg verkürzt sich dementsprechend. Die Wegverstärkung der erfindungsgemäßen Scheibenbremse verringert die erforderliche Betätigungsenergie und ermöglicht die Verwendung einer leistungsschwächeren und damit leichteren und kleiner bauenden Betätigungseinrichtung. Mit der Wegverstärkung weist die erfindungsgemäße Scheibenbremse eine Selbstverstärkung auf. Anders als bei der vorbekannten Scheibenbremse der eingangs erörterten WO 98/14715, stützt sich der Reibbremsbelag der erfindungsgemäßen Scheibenbremse nicht, jedenfalls nicht ausschließlich, an der Betätigungseinrichtung ab, sondern über das keilförmige Abstützelement am Widerlager. Das hat den Vorteil, dass eine Abstützkraft, die zum Drücken des Reibbremsbelags erforderlich ist, nicht oder nur in verringertem Maß von der Betätigungseinrichtung aufgebracht werden muss. Die Betätigungseinrichtung ist entlastet. Die Kraftübersetzung wird durch das keilförmige Abstützelement erreicht.

Die Bewegung des Reibbremsbelags in Umfangsrichtung der Bremsscheibe und entlang der Keilfläche des keilförmigen Abstützelements ist eine Bewegung auf einer gedachten Schraubenlinie, deren Achse mit der Drehachse der Bremsscheibe zusammenfällt. Die Verschiebung des Reibbremsbelags ist in der Regel nur ein kleiner Bruchteil eines vollen Umlaufs. Die Steigung der gedachten Schraubenlinie, auf der der Reibbremsbelag verschiebbar ist, muss nicht zwingend konstant sein, sondern kann sich über den Verschiebeweg des Reibbelags ändern. Die Verschieberichtung des Reibbremsbelags kann von der Umfangsrichtung der Bremsscheibe abweichen, notwendig ist, dass eine Komponente der Verschiebung in Umfangsrichtung der Bremsscheibe weist um die beschriebene Selbstverstärkung zu bewirken. Der Reibbremsbelag kann beispielsweise auch auf einer gedachten Geraden in Richtung einer Sehne zur Bremsscheibe verlaufen. Auch sind die Merkmale Keil und Keilform im Sinne der Erfindung dahingehend zu verstehen, dass der Reibbremsbelag in einem Winkel zur Bremsscheibe verschiebbar ist.

Die Unteransprüche haben vorteilhafte Ausgestaltungen und Weiterbildungen der im Anspruch 1 angegebenen Erfindung zum Gegenstand.

Anspruch 2 sieht ein Federelement vor, das den Reibbremsbelag und den Keil in der Richtung beaufschlagt, in der sich der Keil aufweitet, also in der Richtung der Verschiebung des keilförmigen Abstützelements bei Betätigung der Scheibenbremse und entgegen der Verschiebung des Reibbremsbelags in Drehrichtung der Bremsscheibe. Das Federelement begrenzt die Verschiebung des Reibbremsbelags und seines Keils bei betätigter Scheibenbremse. Das Federelement vermeidet eine Selbsthemmung der Scheibenbremse und ein Blockieren der Bremsscheibe bei hoher Selbstverstärkung, weil die Bremskraft nicht beliebig durch die von der drehenden Bremsscheibe auf den bei betätigter Scheibenbremse gegen sie gedrückten Reibbremsbelag ausgeübte Reibungskraft ansteigt, sondern die Verschiebung des Reibbremsbelags und damit die Bremskraft vom Federelement begrenzt wird. Dadurch ist eine hohe Selbstverstärkung der erfindungsgemäßen Scheibenbremse möglich, die Gegenstand des Anspruchs 3 ist. Eine hohe Selbstverstärkung ermöglicht eine leistungsschwache Betätigungseinrichtung. Anspruch 3 ist dahingehend formuliert, dass der Tangens eines Keilwinkels des Keils kleiner als ein Reibwert des Reibbremsbelags an der Bremsscheibe ist. Diese Bedingung bedeutet an sich einen Betrieb der Scheibenbremse im selbsthemmenden Bereich, wobei wie gesagt, die Selbsthemmung durch das Federelement vermieden wird. Anspruch 3 ist dahingehend zu verstehen, dass jedenfalls bei großem Reibwert die Scheibenbremse in den Bereich der Selbsthemmung gelangen kann. Der Reibwert ändert sich mit der Betriebsbedingung wie insbesondere Nässe, Verschmutzung, Temperatur.

Das Widerlager kann parallel zur Bremsscheibe verlaufen. Anspruch 4 sieht vor, dass das Widerlager in einem Neigungswinkel schräg zur Bremsscheibe verläuft. Dadurch wird außer der Wegverstärkung auch eine Kraftübersetzung erzielt. Der Neigungswinkel ist dem Keilwinkel des Keils des Reibbremsbelags gleichgerichtet, d. h. das Widerlager verläuft in gleicher Richtung schräg zur Bremsscheibe wie eine Keilfläche des Keils. Allerdings ist der Neigungswinkel kleiner als der Keilwinkel, wenn das Widerlager nicht parallel zur Bremsscheibe verläuft. Außer dem Neigungswinkel soll auch ein Stützwinkel zwischen dem Widerlager und einer Normalen zur Bremsscheibe betrachtet werden. Insbesondere ist die erfindungsgemäße Scheibenbremse zu einer elektromechanischen Betätigung vorgesehen, gemäß Anspruch 5 weist sie eine elektromechanische Betätigungseinrichtung auf. Üblich ist ein Elektromotor, der vielfach über ein Untersetzungsgetriebe und ein Rotations-/Translations-Umsetzungsgetriebe das Abstützelement verschiebt. Das Rotations-/Translations-Umsetzungsgetriebe kann ein Gewindetrieb oder beispielsweise auch ein Zahnstangengetriebe sein. Auch ist die Umsetzung der Rotationsbewegung des Elektromotors in eine Translationsbewegung zur Verschiebung des Abstützungselements mittels beispielsweise eines Nockens oder einer Kurbel mit einem Pleuel möglich. Auch ist ein Linearantrieb mit beispielsweise einem Linearmotor, einem Elektromagneten oder einem Piezoelement möglich.

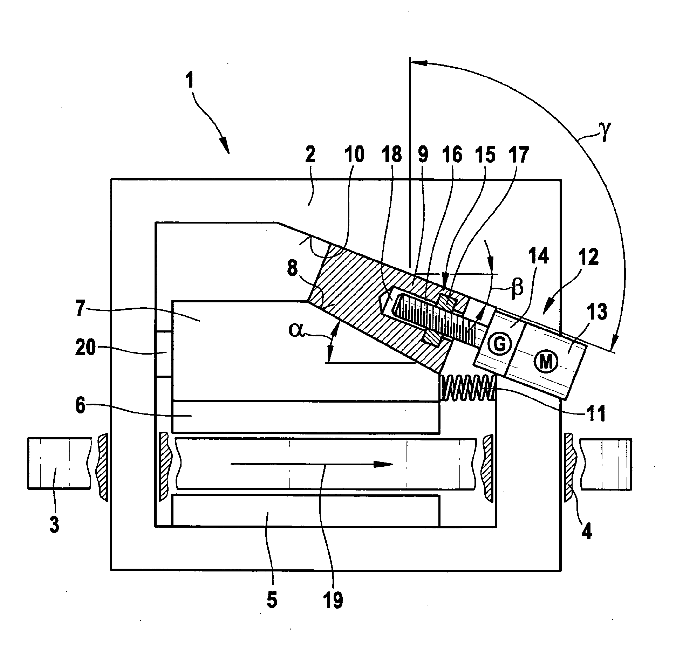

### Kurze Beschreibung der Zeichnung

Die Erfindung wird nachfolgend anhand einer in der Zeichnung dargestellten Ausführungsform näher erläutert. Die einzige Figur zeigt eine erfindungsgemäße Scheibenbremse mit Blickrichtung radial von außen auf eine Bremsscheibe. Die Zeichnung ist als schematisierte und vereinfachte Darstellung zum Verständnis und zur Erläuterung der Erfindung zu verstehen.

### Ausführungsform der Erfindung

Die in der Zeichnung dargestellte, erfindungsgemäße Scheibenbremse 1 weist einen Bremssattel 2 auf, der als sog. Schwimmsattel quer zu einer Bremsscheibe 3 veschiebbar ist. Schiebeführungen 4 des Bremssattels 2 sind in der Zeichnung symbolisch dargestellt.

Auf einer Seite der Bremsscheibe 3 ist ein Reibbremsbelag 5 im Bremssattel 2 unbeweglich angeordnet. Dieser Reibbremsbelag 5 wird nachfolgend auch als fester Reibbremsbelag 5 bezeichnet werden. Auf der anderen Seite der Bremsscheibe 3 ist ein Reibbremsbelag 6 beweglich im Bremssattel 2 angeordnet, der zum Betätigen der Scheibenbremse 1 gegen die Bremsscheibe 3 drückbar ist. Auf einer der Bremsscheibe 3 abgewandten Rückseite weist der bewegliche Reibbremsbelag 6 einen Keil 7 mit einer Keilfläche 8 auf, die in einem Keilwinkel α zur Bremsscheibe 3 verläuft. Mit der Keilfläche 8 stützt sich der bewegliche Reibbremsbelage 6 über seinen Keil 7 an einem keilförmigen Abstützelement 9 ab, das sich wiederum an einem Widerlager 10 des Bremssattels 2 abstützt. Das Widerlager 10 ist in der beschriebenen und dargestellten Ausführungsform der Erfindung eine Schrägfläche, die in einem Neigungswinkel β zur Bremsscheibe 3 verläuft. Es ist auch möglich, dass das Widerlager 10 parallel zur Bremsscheibe 3 verläuft (nicht dargestellt). Die Differenz zwischen dem Neigungswinkel β des Widerlagers 10 und dem Keilwinkel α des Keils 7 entspricht einem Keilwinkel des keilförmigen Abstützelements 9. Die Schrägen des Keils 7 des Reibbremsbelags 6 und des keilförmigen Abstützelements 9 sind einander entgegengesetzt gerichtet, d. h. das keilförmige Abstützelement 9 verjüngt sich in entgegengesetzter Richtung wie der Keil 7. Außer dem Neigungswinkel γ ist auch der Stützwinkel β zwischen dem Widerlager 10 und einer Normalen zur Bremsscheibe 3 zu betrachten.

Der Keil 7 mit dem Reibbremsbelag 6 ist in Umfangsrichtung der Bremsscheibe 3 verschiebbar. Dabei gleitet seine Keilfläche 8 auf dem Abstützelement 9, d. h. der Keil 7 mit dem Reibbremsbelag 6 bewegt sich unter dem Keilwinkel α zur Bremsscheibe 3. Die Bewegung des Keils 7 mit dem Reibbremsbelag 6 ist eine Verschiebung auf einer gedachten, schraubelinienförmigen Bahn, deren Achse mit einer Drehachse der Bremsscheibe 3 zusammenfällt. In Umfangsrichtung ist die Verschiebung des Keils 7 mit dem Reibbremsbelag 6 auf einen kleinen Bruchteil eines vollen Umlaufs begrenzt.

Ein Federelement 11, in der Zeichnung mit dem Symbol einer Schraubendruckfeder dargestellt, greift am beweglichen Reibbremsbelag 6 oder an dessen Keil 7 an und stützt sich am Bremssattel 2 ab. Das Federelement 11 wirkt in Umfangsrichtung der Bremsscheibe 6, d. h. in der Verschieberichtung des Keils 7 und des Reibbremsbelags 6.

Zu Ihrer Betätigung weist die erfindungsgemäße Scheibenbremse 1 eine elektromechanische Betätigungseinrichtung 12 auf, wobei grundsätzlich auch eine andere, beispielsweise hydraulische oder pneumatische Betätigungseinrichtung möglich ist. Die Betätigungseinrichtung 12 weist einen Elektromotor 13 auf, der über ein angeflanschtes Untersetzungsgetriebe 14 und einen Gewindetrieb 15 das Abstützelement 9 verschiebt. In der dargestellten und beschriebenen Ausführungsform der Erfindung findet ein Spindeltrieb mit einer Spindel 16 und einer Mutter 17 als Gewindetrieb 15 Verwendung. Die Mutter 17 liegt dreh- und axialfest in einer Bohrung 18 des Abstützelements 9 ein. Eine Wirkungsrichtung der Betätigungseinrichtung 12 verläuft in einem Winkel zwischen der Keilfläche 8 und dem Widerlager 10, Grenzfälle der Wirkungsrichtung der Betätigungseinrichtung 12 sind parallel zur Keilfläche 8 oder parallel zum Widerlager 10, d. h. im Keilwinkel α oder im Neigungswinkel β zur Bremsscheibe 3. Diese Winkelbegrenzung für die Wirkungsrichtung der Betätigungseinrichtung 12 ist nicht zwingend, nimmt man ein verschlechterten Wirkungsgrad in Kauf, kann die Wirkungsrichtung der Betätigungseinrichtung 12 auch außerhalb der genannten Winkel liegen. Notwendig ist die Verschiebbarkeit des Abstützelement 9 in der Umfangsrichtung der Bremsscheibe 3.

Zur Betätigung der Scheibenbremse 1 wird das keilförmige Abstützelement 9 mit der elektromechanischen Betätigungseinrichtung 12 entlang dem Widerlager 10 des Bremssattels 2 verschoben, d. h. in Umfangsrichtung der Bremsscheibe 3 und im Neigungswinkel β zur Bremsscheibe 3. Das Abstützelement 9 wird in einen enger werdenden Keilspalt zwischen dem Widerlager 10 und der Keilfläche 8 des Keils 7 des Reibbremsbelags 6 verschoben, d. h. dem Keil 7 entgegen und im Neigungswinkel β von der Bremsscheibe 3 weg. Aufgrund seiner sich aufweitenden Keilform drückt das Abstützelement 9 den Keil 7 vom Widerlager 10 ab und infolgedessen den beweglichen Reibbremsbelag 6 gegen die Bremsscheibe 3. Durch das Drücken des beweglichen Reibbremsbelags 6 gegen die eine Seite der Bremsscheibe 3 wird der als Schwimmsattel quer zur Bremsscheibe 3 verschiebbare Bremssattel 2 quer zur Bremsscheibe 3 verschoben und drückt den festen Reibbremsbelag 5 gegen die andere Seite der Bremsscheibe 3, die mit beiden Reibbremsbelägen 5, 6 gebremst wird.

Bei der mit Pfeil 19 angenommenen Drehrichtung der Bremsscheibe 3 übt die drehende Bremsscheibe 3 eine Reibungskraft in ihrer Umfangs- und Drehrichtung auf die Reibbremsbeläge 5, 6 aus. Die Reibungskraft beaufschlagt den beweglichen Reibbremsbelag 6 und dessen Keil 7 in Richtung eines enger werdenden Keilspalts zwischen der Bremsscheibe 3 und dem Abstützelement 9. Die von der drehenden Bremsscheibe 3 auf den gegen sie gedrückten Reibbremsbelag 6 ausgeübte Reibungskraft verschiebt den Reibbremsbelag 6 zusammen mit seinem Keil 7 entgegen der Verschiebung des Abstützelements 9 durch die Betätigungseinrichtung 12. Der Reibbremsbelag 6 verschiebt sich unter dem Keilwinkel α auf die Bremsscheibe 3 zu, d. h. ein Teil eines Zustellwegs des Reibbremsbelags 6 zur Bremsscheibe 3 resultiert aus der von der drehenden Bremsscheibe 3 auf den gegen sie gedrückten Reibbremsbelag 6 ausgeübten Reibungskraft. Es erfolgt somit eine Wegverstärkung, die Betätigungseinrichtung 12 bringt nur einen Teil des zur Betätigung der Scheibenbremse 1 erforderlichen Zustellwegs auf, ein anderer Teil wird wie beschrieben von der drehenden Bremsscheibe 3 aufgebracht.

Zusätzlich erfolgt eine Kraftübersetzung durch die Abstützung des Abstützelements 9 unter dem Neigungswinkel β am Widerlager 10 des Bremssattels 2. Die von der drehenden Bremsscheibe 3 auf den bei betätigter Scheibenbremse 1 gegen sie gedrückten Reibbremsbelag 6 ausgeübte Reibungskraft bewirkt eine Abstützung am Widerlager 10 mit einer Abstützkraft senkrecht zum Widerlager 10. Diese Abstützkraft weist eine Kraftkomponente senkrecht zur Bremsscheibe 3 auf, die den Reibbremsbelag 6 gegen die Bremsscheibe 3 drückt. Die von der Betätigungseinrichtung 12 aufgebrachte Andruckkraft des Reibbremsbelags 6 gegen die Bremsscheibe 3 und damit die Bremskraft der Scheibenbremse 1 wird dadurch erhöht. Die erfindungsgemäße Scheibenbremse 1 weist eine Selbstverstärkung auf, sie ist wegverstärkend und kraftübersetzend.

Beim Verschieben des Reibbremsbelags 6 zusammen mit seinem Keil 7 in Drehrichtung der Bremsscheibe 3 spannt der Keil 7 das Federelement 11, das eine Federkraft entgegen der Verschieberichtung auf den Keil 7 ausübt. Die Federkraft steigt mit zunehmender Verschiebung des Keils 7 und der damit einhergehenden zunehmenden Spannung des Federelements 11. Die Federkraft des Federelements 11 steigt solange, bis ein Kräftegleichgewicht herrscht. Die Verschiebung des Reibbremsbelags 6 wird vom Federelement 11 begrenzt, selbst bei einer großen oder sogar gegen unendlich gehenden Selbstverstärkung steigt die Bremskraft der Scheibenbremse 1 nicht beliebig an, sondern nur bis zu einem durch die Spannung des Federelements 11 begrenzten Wert. Die erfindungsgemäße Scheibenbremse 1 ermöglicht deswegen eine hohe Selbstverstärkung ohne die Gefahr einer Selbsthemmung. Das bedeutet, die erfindungsgemäße Scheibenbremse 1 blockiert die Bremsscheibe 3 nicht ungewollt durch eine Verschiebung des Reibbremsbelags 6 aufgrund der von der Bremsscheibe 3 auf ihn ausgeübten Reibungskraft. Das ist zu unterscheiden von einem Blockieren der Bremsscheibe 3 durch die von der Betätigungseinrichtung 12 ausgeübte und durch die Selbstverstärkung verstärkte Bremskraft der Scheibenbremse 1. Die Bremskraft der Scheibenbremse 1 ist trotz des Federelements 11 abhängig von der von der Betätigungseinrichtung 12 aufgebrachten Betätigungskraft.

Ein Anschlag 20 des Bremssattels 2 begrenzt einen Verschiebeweg des beweglichen Reibbremsbelags 6 und seines Keils 7 in Löserichtung der Scheibenbremse 1.

Ein Verschleißausgleich ist in einfacher Weise dadurch möglich, dass das Abstützelement 9 beim Lösen der Scheibenbremse 1 nicht bis in seine Ausgangsstellung zurückverschoben wird, sondern nur soweit, dass sich ein gewünschter Lüftspalt zwischen den Reibbremsbelägen 5, 6 und der Bremsscheibe 3 einstellt.

## Patentansprüche

1. Selbstverstärkende Scheibenbremse, mit einem Reibbremsbelag (6) und
mit einer Betätigungseinrichtung (12), mit der der Reibbremsbelag (6) zur Betätigung der Scheibenbremse (1) gegen eine Bremsscheibe (3) drückbar ist, wobei der Reibbremsbelag (6) in einer Umfangsrichtung zur Bremsscheibe (3) verschiebbar ist und einen Keil (7) auf seiner der Bremsscheibe (3) abgewandten Rückseite aufweist, der sich in der Umfangsrichtung zur Bremsscheibe (3) verjüngt in die der Reibbremsbelag (6) verschiebbar ist,
wobei der Keil (7) eine Keilfläche (8) aufweist, die in einem Keilwinkel (α) zur Bremsscheibe (3) verläuft,
wobei die Scheibenbremse (1) ein keilförmiges Abstützelement (9) aufweist, das sich in entgegen gesetzter Richtung wie der Keil (7) des Reibbremsbelags verjüngt,
das in entgegen gesetzter Richtung wie der Reibbremsbelag (6) mit dem Keil (7) verschiebbar ist und über das sich der Keil (7) des Reibbremsbelags (6) an einem Widerlager (10) abstützt,
wobei zur Betätigung der Scheibenbremse (1) das Abstützelement (9) mit der Betätigungseinrichtung (12) verschiebbar ist,
**dadurch gekennzeichnet,**
**dass** das Widerlager (10) gebildet ist von einer Schrägfläche, die in einem Neigungswinkel (β) zur Bremsscheibe (3) verläuft und dass eine Wirkrichtung der Betätigungseinrichtung (12) in einem Winkel zwischen der Keilfläche (8) und dem Widerlager (10) zur Bremsscheibe (3) verläuft.

2. Selbstverstärkende Scheibenbremse nach Anspruch 1, **dadurch gekennzeichnet, dass** die Scheibenbremse (1) ein Federelement (11) aufweist, das den Reibbremsbelag (6) mit dem Keil (7) in der Richtung beaufschlagt, in der sich der Keil (7) aufweitet.

3. Selbstverstärkende Scheibenbremse nach Anspruch 2, **dadurch gekennzeichnet, dass** der Tangens eines Keilwinkels (α) des Keils (7) des Reibbremsbelags (6) kleiner als ein Reibwert zwischen dem Reibbremsbelag (6) und der Bremsscheibe (3) ist.

4. Selbstverstärkende Scheibenbremse nach Anspruch 1, **dadurch gekennzeichnet, dass** das Widerlager (10) in einem Neigungswinkel (γ) zur Bremsscheibe (3) verläuft, und dass der Neigungswinkel (γ) des Widerlagers (10) zur Bremsscheibe (3) einem Keilwinkel (α) des Keils (7) des Reibbremsbremsbelags (6) gleichgerichtet ist.

5. Selbstverstärkende Scheibenbremse nach Anspruch 1, **dadurch gekennzeichnet, dass** die Scheibenbremse (1) eine elektromechanische Betätigungseinrichtung (12) aufweist.

## Claims

1. Self-energizing disc brake, having a friction brake lining (6) and having an actuating device (12) by means of which the friction brake lining (6) can be pressed against a brake disc (3) in order to actuate the disc brake (1), with the friction brake lining (6) being movable in a circumferential direction relative to the brake disc (3) and having a wedge (7) on its rear side facing away from the brake disc (3), which wedge (7) tapers in the circumferential direction relative to the brake disc (3) in which the friction brake lining (6) is movable,
with the wedge (7) having a wedge surface (8) which runs at a wedge angle (α) relative to the brake disc (3),
with the disc brake (1) having a wedge-shaped support element (9) which tapers in the opposite direction to the wedge (7) of the friction brake lining,
which support element (9) is movable in the opposite direction to the friction brake lining (6) having the wedge (7) and via which support element (9) the wedge (7) of the friction brake lining (6) is supported on an abutment (10),
with it being possible for the support element (9) to be moved by means of the actuating device (12) in order to actuate the disc brake (1),
**characterized**
**in that** the abutment (10) is formed by an oblique surface which runs at an angle of inclination (β) relative to the brake disc (3) and in that a direction of action of the actuating device (12) runs at an angle with respect to the brake disc (3) between the wedge surface (8) and the abutment (10).

2. Self-energizing disc brake according to Claim 1, **characterized in that** the disc brake (1) has a spring element (11) which loads the friction brake lining (6) having the wedge (7) in the direction in which the wedge (7) widens.

3. Self-energizing disc brake according to Claim 2, **characterized in that** the tangent of a wedge angle (α) of the wedge (7) of the friction brake lining (6) is smaller than a friction coefficient between the friction brake lining (6) and the brake disc (3).

4. Self-energizing disc brake according to Claim 1, **characterized in that** the abutment (10) runs at an angle of inclination (γ) relative to the brake disc (3), and **in that** the angle of inclination (γ) of the abutment (10) relative to the brake disc (3) is aligned in the same direction as a wedge angle (α) of the wedge (7) of the friction brake lining (6).

5. Self-energizing disc brake according to Claim 1, **characterized in that** the disc brake (1) has an electromechanical actuating device (12).

## Revendications

1. Frein à disque à auto-serrage, comprenant une garniture de frein à friction (6) et un dispositif d'actionnement (12), avec lequel la garniture de frein à friction (6) peut être pressée contre un disque de frein (3) pour l'actionnement du frein à disque (1), la garniture de frein à friction (6) pouvant être déplacée dans une direction périphérique vers le disque de frein (3) et présentant une clavette (7) sur son côté arrière opposé au disque de frein (3), qui se rétrécit dans la direction périphérique vers le disque de frein (3) dans lequel la garniture de frein à friction (6) peut être déplacée,
la clavette (7) présentant une surface de clavette (8) qui s'étend suivant un angle de clavetage (α) par rapport au disque de frein (3),
le frein à disque (1) présentant un élément de support en forme de clavette (9), qui se rétrécit dans la direction opposée à la clavette (7) de la garniture de frein à friction,
lequel élément peut être déplacé dans la direction opposée à la garniture de frein à friction (6) avec la clavette (7), et par le biais duquel la clavette (7) de la garniture de frein à friction (6) s'appuie sur une butée (10),
l'élément de support (9) pouvant être déplacé avec le dispositif d'actionnement (12) en vue de l'actionnement du frein à disque (1),
**caractérisé en ce que**
la butée (10) est formée par une surface oblique qui s'étend suivant un angle d'inclinaison (β) par rapport au disque de frein (3) et **en ce qu'**une direction d'action du dispositif d'actionnement (12) s'étend suivant un angle entre la surface de clavette (8) et la butée (10) vers le disque de frein (3).

2. Frein à disque à auto-serrage selon la revendication 1, **caractérisé en ce que** le frein à disque (1) présente un élément de ressort (11) qui sollicite la garniture de frein à friction (6) avec la clavette (7) dans la direction dans laquelle la clavette (7) s'élargit.

3. Frein à disque à auto-serrage selon la revendication 2, **caractérisé en ce que** la tangente d'un angle de clavette (α) de la clavette (7) de la garniture de frein à friction (6) est inférieure à un coefficient de friction entre la garniture de frein à friction (6) et le disque de frein (3).

4. Frein à disque à auto-serrage selon la revendication 1, **caractérisé en ce que** la butée (10) s'étend suivant un angle d'inclinaison (γ) par rapport au disque de frein (3) et **en ce que** l'angle d'inclinaison (γ) de la butée (10) par rapport au disque de frein (3) est orienté dans le même sens qu'un angle de clavette (α) de la clavette (7) de la garniture de frein à friction (6).

5. Frein à disque à auto-serrage selon la revendication 1, **caractérisé en ce que** le frein à disque (1) présente un dispositif d'actionnement (12) électromécanique.
